# EUROPEAN PATENT SPECIFICATION

(11) **EP 3 694 741 B1**
(45) Date of publication and mention of the grant of the patent: **27.11.2024**
(21) Application number: 18867057.4
(22) Date of filing: 11.10.2018
(51) Int. Cl.: B60L 9/24

(54) **TRAIN TRACTION SYSTEM**
ZUGTRAKTIONSSYSTEM
SYSTÈME DE TRACTION DE TRAIN

(30) Priority: 12.10.2017 GB 201716743
(43) Date of publication of application: 19.08.2020
(73) Proprietor: Hitachi, Ltd., Tokyo 100-8280 (JP)
(72) Inventor: MOCHIZUKI, Kento, London Greater London EC1N 2PB (GB); OURA, Yuta, Tokyo 100-8280 (JP); INARIDA, Satoru, Tokyo 100-8280 (JP)
(74) Representative: Mewburn Ellis LLP
(86) International application number: PCT/JP2018/037961
(87) International publication number: WO 2019/074070

(56) References cited:
- WO-A1-2015/079540
- CN-A- 104 221 277
- CN-U- 203 968 005
- JP-A- 2015 198 544
- JP-A- H0 583 803
- JP-A- H0 583 803
- JP-A- H11 113 102
- US-A- 5 642 020

## Description

### [Technical Field]

The present disclosure relates to a traction system for a train.

### [Background Art]

Railway lines often have electrical trackside safety and communication equipment used to transmit information (e.g. speed restrictions, stop locations etc.) to traffic on the lines in order to prevent unsafe train operation and thereby avoid accidents.

Electric-powered trains using such lines typically have a traction system which converts electric power provided from an overhead wire to suitable AC power for one or more traction motors mounted on the trains. The traction systems may include AC/DC converters. In particular, PWM converters are in widespread use, the PWM converter comprising bridge-connected diodes, with each diode having a self-extinction type switching element (e.g. an IGBT) connected in inverse-parallel thereto.

However, such AC/DC converters generate harmonic noise while they operate, and it is desirable to reduce this noise to below a threshold level in order to prevent the noise flowing into the rails and influencing the performance of the trackside safety and communication equipment.

GB A 2527881 and GB A 2537732 propose addressing this problem by adopting plural AC/DC converters which have the same PWM switching frequency but which are operated so that the PWM carrier waves (i.e. pulse signals) of the respective converters are phase shifted from each other in order to cancel out each other's second order harmonic noise (i.e. noise at twice the frequency of the pulse signals), and hence reduce the noise signal flowing into the rails. US 5642020 proposes an electric vehicle control device wherein electric motors are driven by PWM converters and inverters. Document JPH0583803 relates to an electric vehicle control apparatus for controlling an electric vehicle driving motor using a variable voltage-frequency inverter.

The traction system typically further includes transformer equipment for stepping down the electric voltage level from the high voltage of the overhead wire, the AC/DC converters operating on the stepped down voltage to convert it to DC, which is then further manipulated to provide AC power for the motors. However, when the connection is made by the transformer equipment to the power source (via the overhead wire) on the AC side of the AC/DC converter, an inrush current flows into the transformer equipment from the power source, resulting in another noise current. When multiple traction systems are mounted on a train and these systems are connected to the power source at same time, the individual noise currents can reinforce each other to such an extent that operation of the trackside safety and communication equipment can be compromised.

The present invention aims to address such problems. In particular, an aim is to reduce noise created by the traction system and thereby reduce the risk of compromising the operation of trackside safety and communication equipment. More particularly, the present invention aims to address the technical problem of minimising the noise current caused by interference of the inrush currents supplied from the power source to the plurality of transformers via the overhead line, and suppressing higher-order harmonics in the harmonic noise generated by the AC/DC converters via phase shifting. A solution to the above technical problem is provided according to the embodiments and examples set forth in the present description and according to the appended claims.

### [Summary of Invention]

Accordingly in a first embodiment, the present invention provides a traction system for a train according to claim 1.

Advantageously, by closing the first switches in sequence, rather than all at the same time, it is possible to reduce the overall noise current produced by the inrush current flows into the transformers. However, this sequential closing, if carried through to a sequential start up of the AC/DC converters, can cause a lead-in period when fewer converters are operating than are needed to properly apply phase shifting to cancel out second order harmonic noise. Thus to avoid this, the system delays the start of power conversion by the converters until after the first switches have closed, and further ensures that the start ups are simultaneous.

In a second embodiment, the present invention provides a train having the traction system of the first embodiment.

In a third embodiment, the present invention provides a train set including first and second coupled trains, each according to the second embodiment, wherein the controllers of the coupled trains are further configured such that the start of the sequential closing of the first switches of the second train occurs a further predetermined time interval after the completion of the sequential closing of the first switches of the first train. By staging the closing of the first switches in this way, it can be possible to provide power to motors of at least a part of the train set at the earliest possible time. In particular, the controllers of the coupled trains may be further configured such that the power conversion using pulse width modulation by the AC/DC converters of the first train is started before completion of the sequential closing of the first switches of the second train.

In further examples, the present invention provides respective uses of the traction system, train and train set of the first to third embodiments and respective methods of operating the traction system, train and train set of the first to third embodiments. For example, a method of operating a traction system for a train according to claim 12 is provided.

Optional features of the present disclosure will now be set out.

The system may have three or more of the converter units. In general at least three AC/DC converters are needed to use phase shifting to cancel out second order harmonic noise.

The system may have two or more of the transformers. Thus one transformer may provide stepped down AC electric power to more than one converter unit.

The first predetermined time interval may be selected such that the inrush current provoked by the closing of a previous first switch peaks before a next first switch closes.

The traction system may have: plural second switches which are closable to respectively connect the AC/DC converters to low voltage sides of the transformers. The controller may then be further configured to control: the timing of the closing of the second switches such that each second switch closes a second predetermined time interval after the first switch which connects the high voltage sides of the respective transformer to the overhead wire has closed; and the timing of the start of power conversion using pulse width modulation by each of the AC/DC converters such that the starts are simultaneous and after the first and the second switches have closed.

The traction system may have: one or more pantographs for obtaining the AC electric power from the overhead wire; a power line which connects the overhead wire sides of the first switches; and one or more third switches which are closable to respectively connect the one or more pantographs to the power line. The controller may then be further configured to control the timing of the closing of the one or more third switches such that the one or more third switches close before the start of the sequential closing of the first switches.

Each converter unit further includes an inverter for converting the DC electric power provided by the AC/DC convertor to multiphase AC electric power. Each converter unit may then further include a smoothing capacitor between the AC/DC convertor and the inverter. The traction system may further have plural traction motors driven by the multiphase AC electric power provided by the converter units.

### [Brief Description of Drawings]

[Fig. 1]

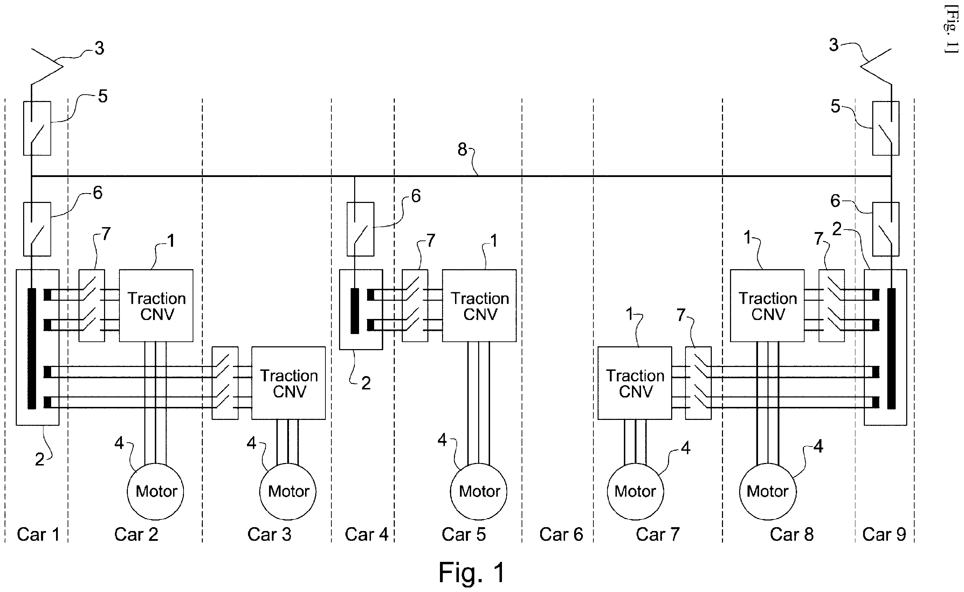

   Figure 1 shows schematically the structure of a first traction system.
[Fig. 2]

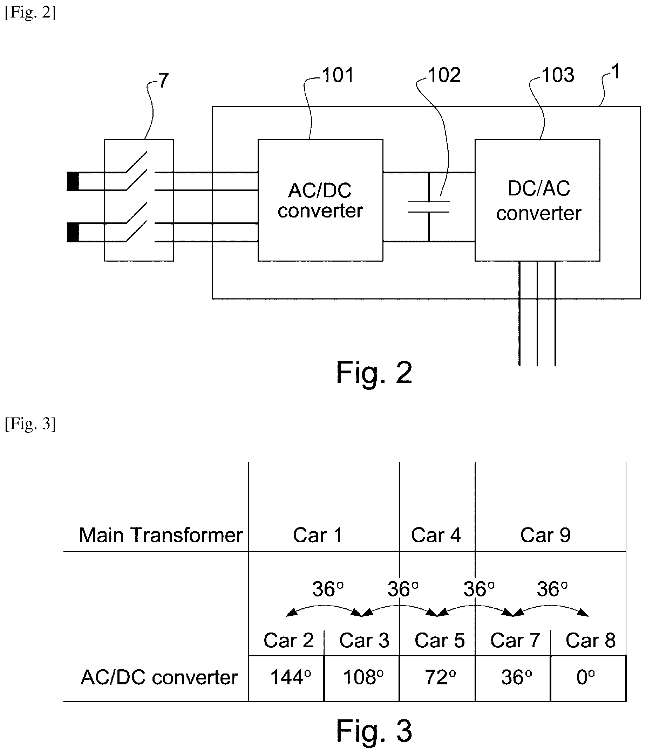

   Figure 2 shows schematically more detail of the structure of a traction converter unit of the first traction system.
[Fig. 3]
   Figure 3 shows schematically how PWM-operation of the traction converter units of the first traction system can be phase shifted.
[Fig. 4]

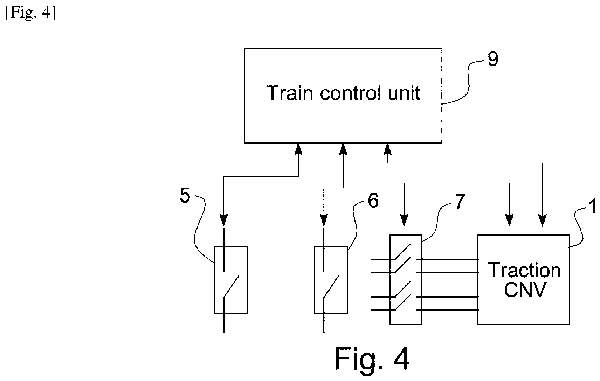

   Figure 4 shows schematically functions of a control unit for controlling the first traction system.
[Fig. 5]

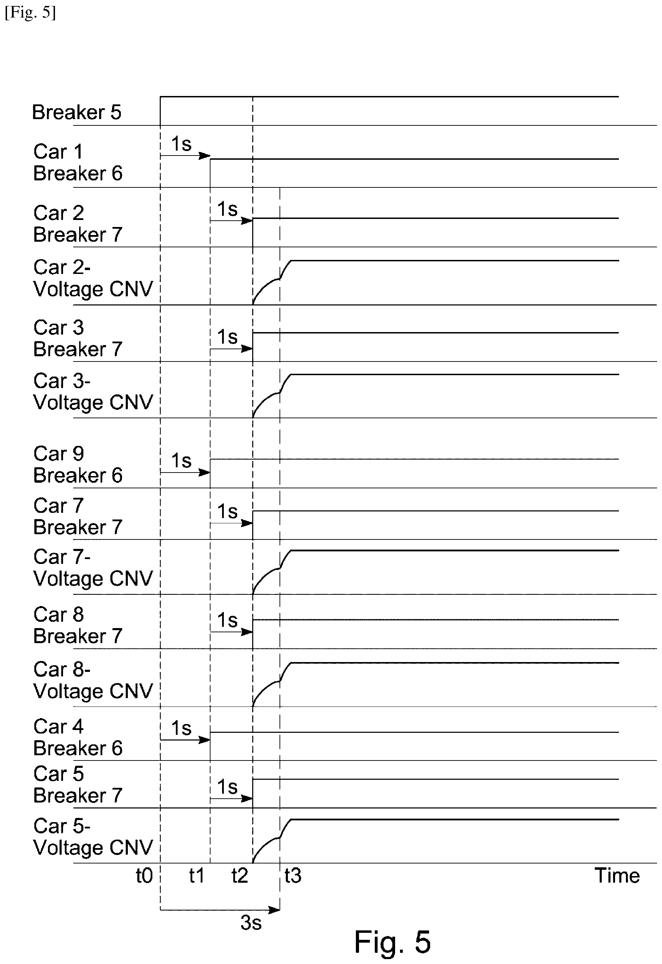

   Figure 5 shows a comparative example first starting sequence for transformers and the traction converter units of the first traction system.
[Fig. 6]

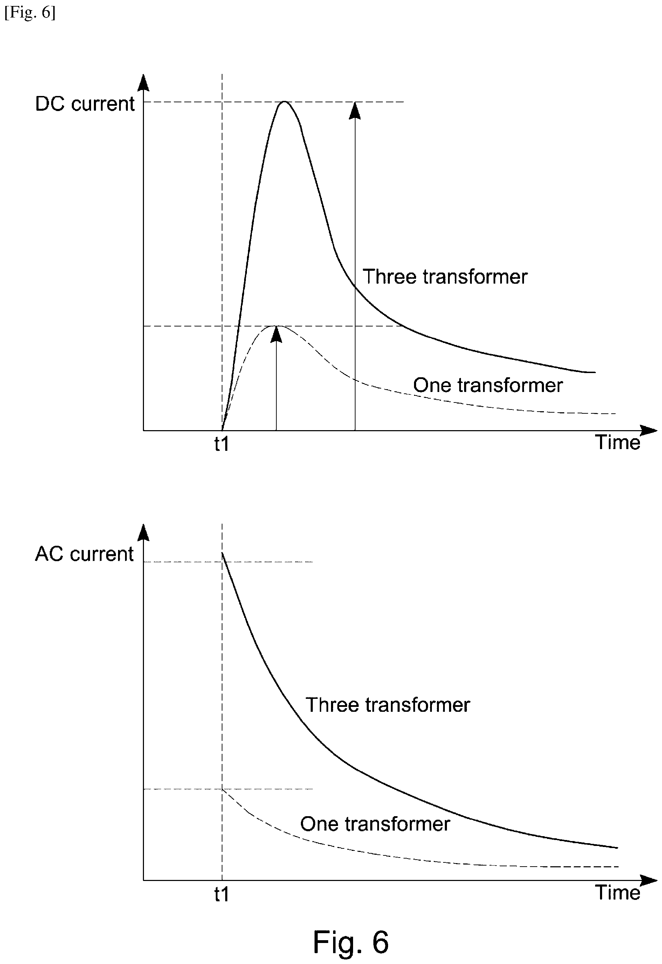

   Figure 6 shows respective plots of DC current and AC current against time for combined noise currents of the first starting sequence.
[Fig. 7]

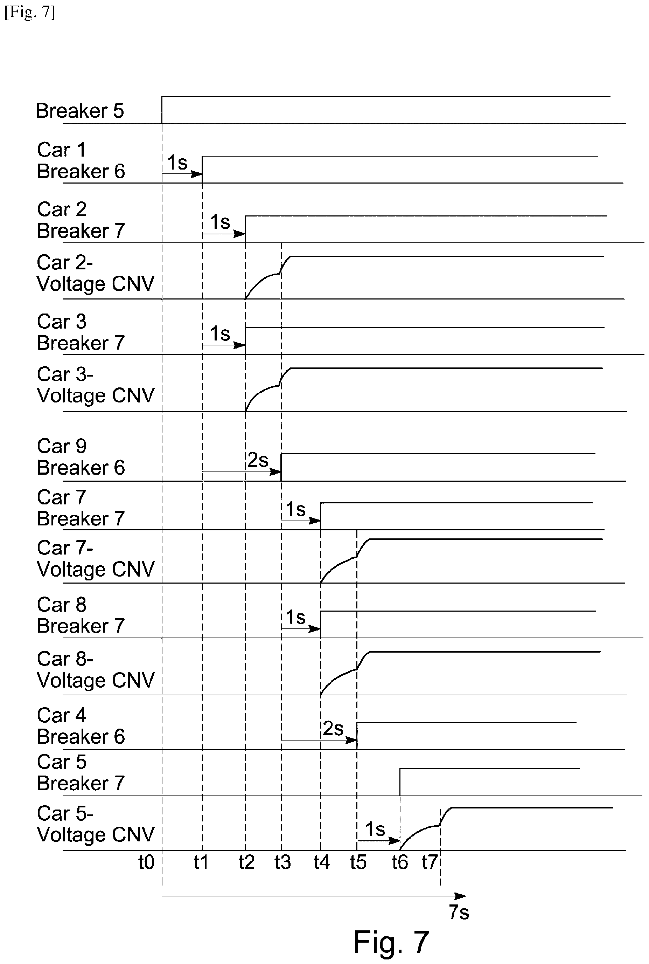

   Figure 7 shows a comparative example second starting sequence for the transformers and the traction converter units of the first traction system.
[Fig. 8]

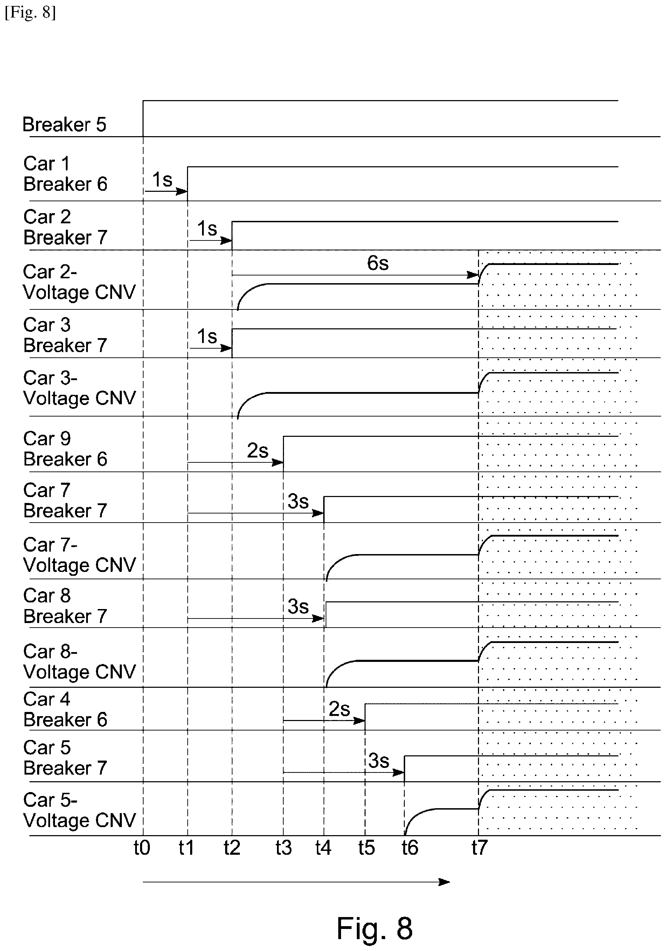

   Figure 8 shows an example third starting sequence for the transformers and the traction converter units of the first traction system.
[Fig. 9]

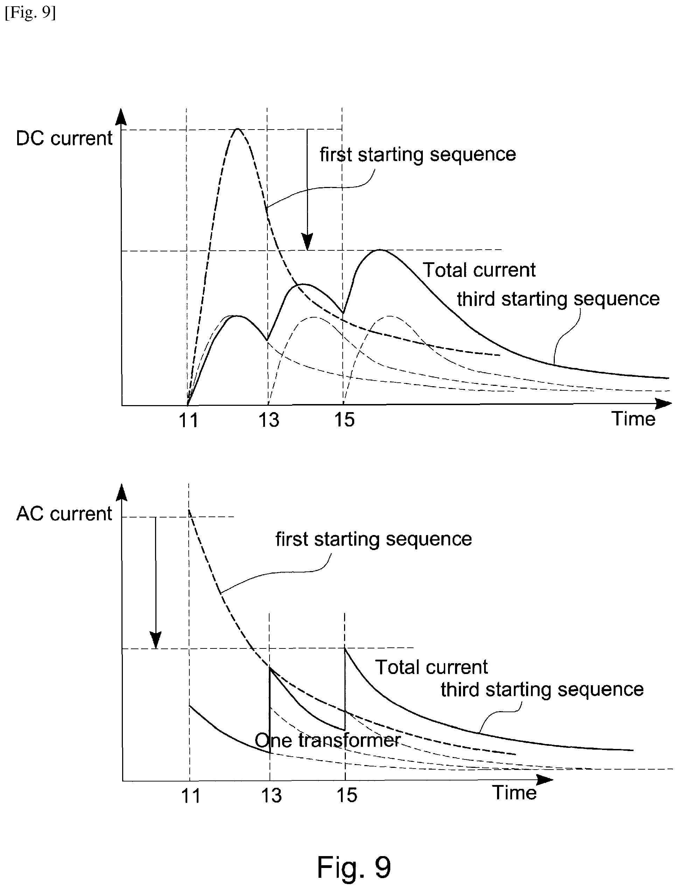

   Figure 9 shows respective plots of DC current and AC current against time for combined noise currents of the third and first starting sequences.
[Fig. 10]

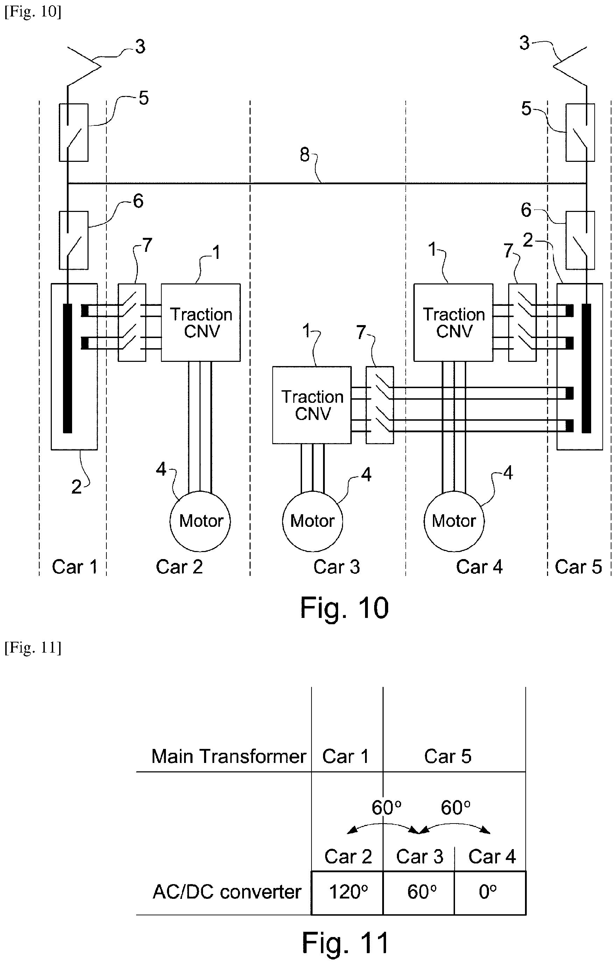

   Figure 10 shows schematically the structure of a second traction system.
[Fig. 11]
   Figure 11 shows schematically how PWM-operation of the traction converter units of the second traction system can be phase shifted.
[Fig. 12]

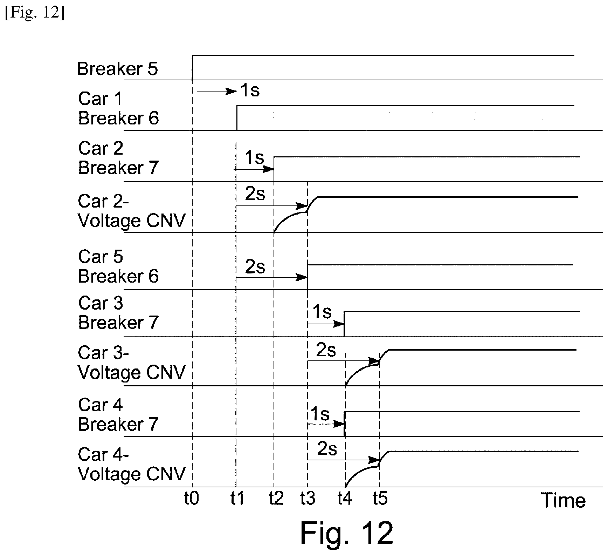

   Figure 12 shows a comparative example fourth starting sequence for the transformers and the traction converter units of the second traction system.
[Fig. 13]

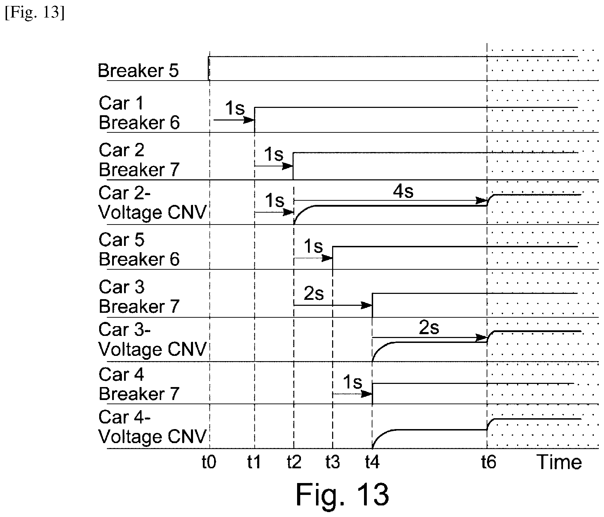

   Figure 13 shows an example fifth starting sequence for the transformers and the traction converter units of the second traction system.
[Fig. 14]

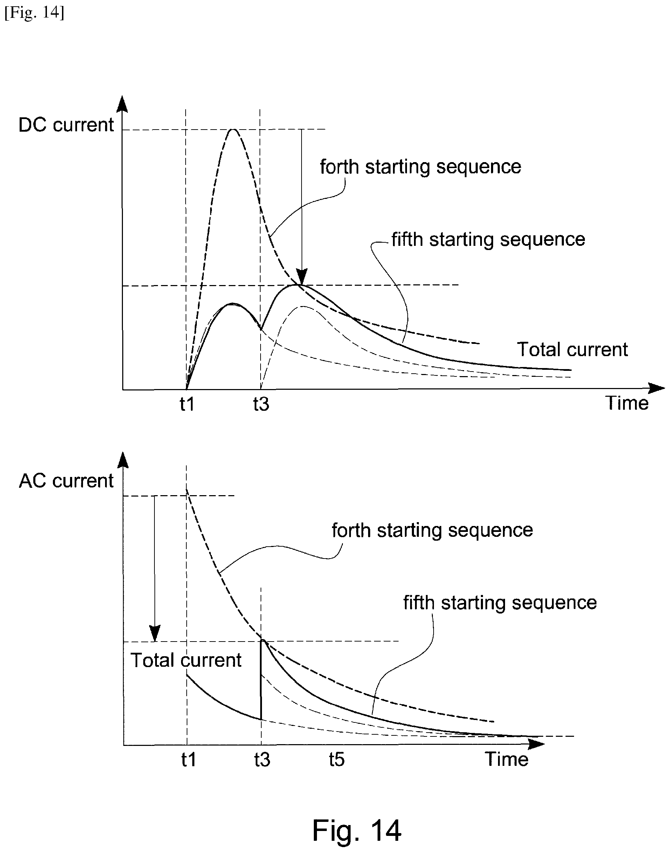

   Figure 14 shows respective plots of DC current and AC current against time for combined noise currents of the fourth and fifth starting sequences.
[Fig. 15]

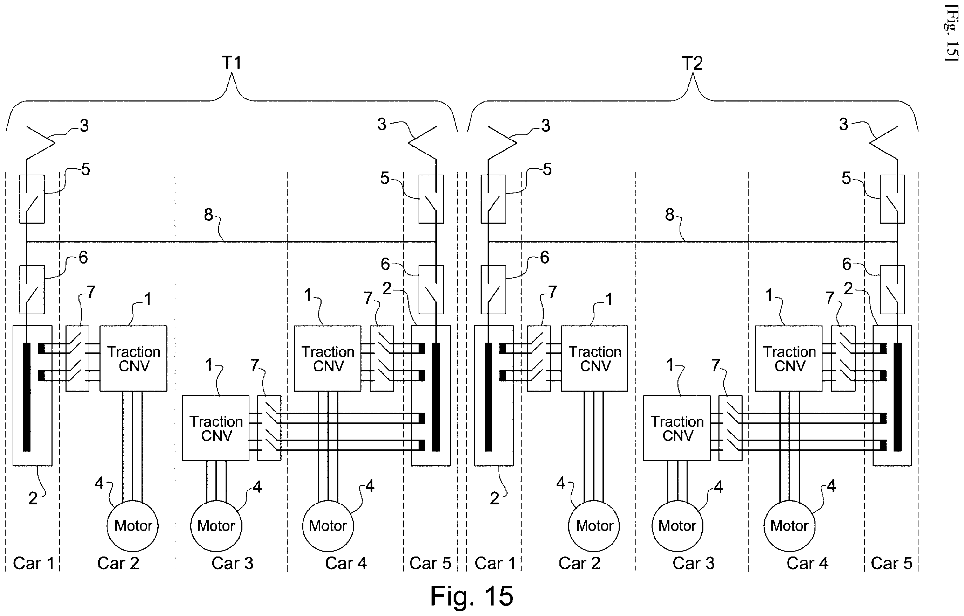

   Figure 15 shows schematically the structures of two traction systems located in respective trains coupled to form a train set.
[Fig. 16]

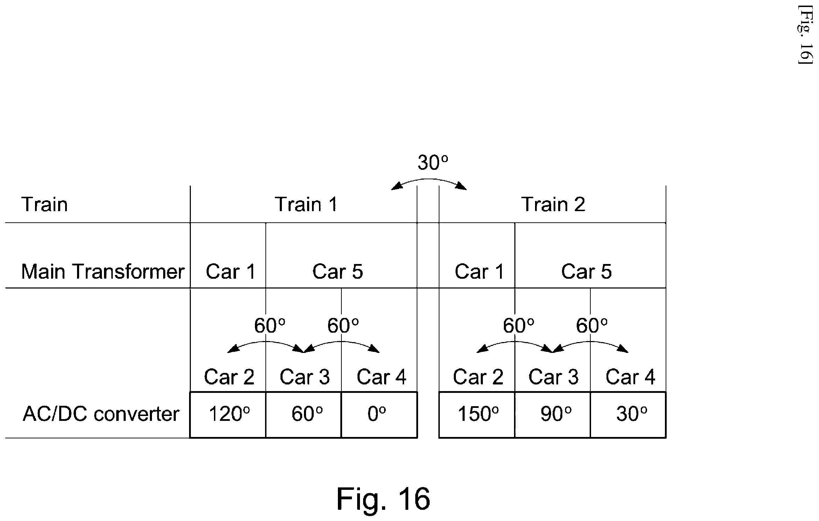

   Figure 16 shows schematically how PWM-operation of the traction converter units of the two traction systems can be phase shifted.
[Fig. 17]

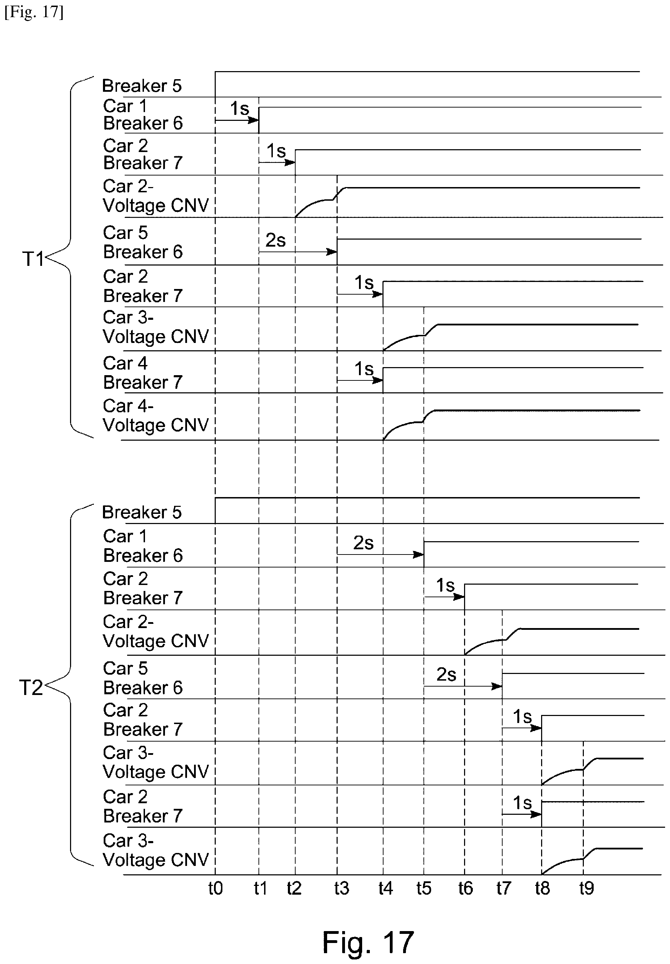

   Figure 17 shows a comparative example sixth starting sequence for the transformers and the traction converter units of the two traction systems.
[Fig. 18]

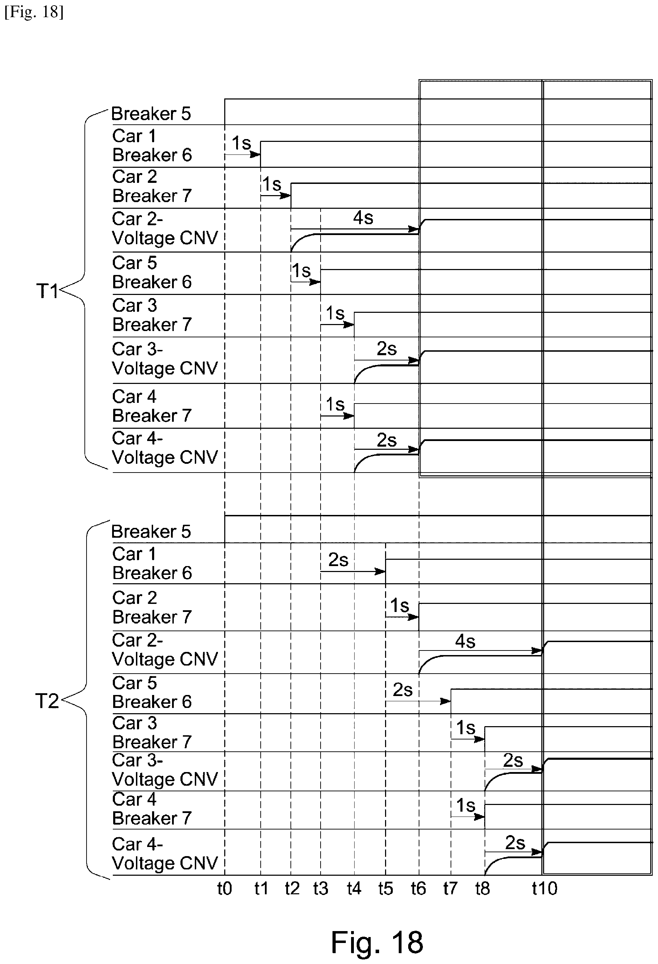

   Figure 18 shows an example seventh starting sequence for the transformers and the traction converter units of the two traction systems.

### [Description of Embodiment(s)]

Figure 1 shows schematically the structure of a first traction system. The system is located in a train made up of nine cars (Cars 1-9). Cars 2, 3, 5, 7 and 8 each have a traction converter (CNV) unit 1 and a traction motor 4 powered by the CNV unit to drive the train. Cars 1, 4, 6 and 9 are without CNV units and traction motors, but Cars 1, 4 and 9 each have transformer equipment 2, and Cars 1 and 9 also each have a pantograph 3 for collecting high voltage AC electric power from an overhead wire. The high voltage sides of the transformer equipment are connected by a power line 8 which extends from Car 1 to Car 9.

The AC power collected by the pantographs 3 is provided to the transformer equipment 2 and then, as stepped down AC power, to the CNV units. The CNV units 1 convert this stepped down single-phase AC power to three-phase AC power, and provide the three-phase power to the motors 4. The flow of power through the system is controlled by first breaker switches 6, second breaker switches 7 and third breaker switches 5. The third breaker switches 5 are closable to respectively connect the pantographs to the power line 8. The first breaker switches 6 are closable to connect the high voltage sides of the transformer equipment 2 to the overhead wire power line 8 and thence the overhead wire. The second breaker switches 7 are closable to connect the CNV units 1 to the low voltage sides of the transformer equipment 2. Thus each car having a pantograph 3 has a third breaker switch 5, each car having transformer equipment 2 has a first breaker switch 6, and each car having a CNV unit 1 has a second breaker switch 7.

Figure 2 shows schematically more detail of the structure of the CNV unit 1. The CNV unit 1 comprises a PWM-operated AC/DC converter 101 which converts the stepped down AC power to DC power, an inverter 103 which converts the DC power to multiphase AC power with a variable voltage and frequency and provides the AC power to a traction motor 4, and a smoothing capacitor or condenser 102 connected between the AC/DC converter and the inverter to smooth DC voltage.

Figure 3 shows schematically how the PWM-operation of the CNV units 1 can be phase shifted to cancel out second order harmonic noise. In particular, the following phase differences can be set for the PWM pulse signals of the five AC/DC converters 101 of the CNV units: Car 2: 144°, Car 3: 108°, Car 5: 72°, Car 7: 36°, Car 8: 0°. These phase differences correspond to a 36° car-to-car shift, and can be set relative to the zero-crossing point of the input stepped down AC power (which has, typically, a 50 Hz frequency) as this is a reference available to all the CNV units. Further details can be found in GB A 2527881 and GB A 2537732.

Figure 4 shows schematically functions of a control unit 9 for controlling the traction system. The control unit 9 ca be mounted on any car of the train. Command signals (open/close) for the first 6 and third 5 breaker switches can be sent directly to the respective switch from the control unit. Command signals for the second breaker switch 7 can also be sent to the respective switches from the control unit, but typically via the respective CNV unit 1. The control unit 9 collects switch status directory information (open/close) directly from the switches or via communication with the CNV units. The control unit also sends command signals to the CNV units 1 to start/stop power conversion, and collects operation status information (operating/non-operating) from the CNV units by communication therewith.

Figure 5 shows a comparative example first starting sequence for the transformers 2 and the CNV units 1 of the system of Figure 1, as controlled by the control unit 9. First one of the pantograph 3 mounted on Cars 1 and 9 is deployed and made ready to collect electrical power from the overhead wire (stand-by condition). After confirmation is received that the pantograph is in stand-by condition, its third breaker switch 5 is closed (t0). A predetermined time (e.g. 1 sec) after the closure of the third breaker switch, the three first breakers switches 6 mounted in Cars 1, 4, and 9 are closed (t1). This causes an inrush current flow into the three transformers 2, and a corresponding noise current is created. Another predetermined time (e.g. 1 sec) after the closures of the first breaker switches, the second breaker switches 7 in Cars 2, 3, 5, 7 and 8 for the CNV units 1 are closed (t2). When the second breaker switches are closed, DC current flows into the capacitors 102 of their CNV units through the diode element of the AC/DC converters 101, and the capacitors charge up and their voltage increases. Yet another predetermined time (e.g. 1 sec) after the closures of the second breaker switches, the AC/DC converters 101 start their switching operation under the control of phase-shifted PWM pulse signals (t3).

This first starting sequence makes it possible to reduce harmonic noise from the pulse signals immediately the AC/DC converters 101 commence their switching operation because all the multiple CNV units are made ready to start at the same time. However, the three transformers 2 are connected to the AC power source at the same time (t1) and provoke simultaneous inrush currents. Hence, as shown in Figure 6, both the DC and AC components of the combined noise currents created by the inrush currents superimpose on each other. In a worst case, the peak noise current can be three times higher than that created by the connection of a single transformer.

Accordingly Figure 7 shows a comparative example second starting sequence for the transformers 2 and the CNV units 1 of the system of Figure 1. This sequence can avoid some of the worst effects of the superposition of the noise currents created by the inrush currents of the transformers 2. First, one of the pantographs 3 mounted on Cars 1 and 9 is deployed and made ready to collect electrical power from the overhead wire (stand-by condition). After confirmation is received that the pantograph is in stand-by condition, its third breaker switch 5 is closed (t0). A predetermined time (e.g. 1 sec) after the closure of the third breaker switch, the first breaker switch 6 mounted in Car 1 is closed (t1). This causes an inrush current flow into its transformer 2, and a corresponding noise current is created. Another predetermined time (e.g. 1 sec) after the closure of the first breaker switch, the second breaker switches 7 in Cars 2 and 3 for the respective CNV units 1 of those cars are closed (t2). When the second breaker switches of Cars 2 and 3 are closed, DC current flows into the capacitors 102 of their CNV units through the diode elements of the AC/DC converters 101, and the capacitors charge up and their voltage increases. Yet another predetermined time (e.g. 1 sec) after the closures of the second breaker switches of Cars 2 and 3, the AC/DC converters 101 of Cars 2 and 3 start their switching operations with the above-mentioned (36°) phase shifts in their PWM pulse signals (t3).

Another predetermined time (e.g. 2 sec) after the first breaker switch 6 of Car 1 is closed, the first breaker switch 6 mounted in Car 9 is closed (t3). This causes an inrush current flow into its transformer 2, and a corresponding noise current is created. A predetermined time (e.g. 1 sec) after the closure of the first breaker switch, the second breaker switches 7 in Cars 7 and 8 for the respective CNV units 1 of those cars are closed (t4). When the second breaker switches of Cars 7 and 8 are closed, DC current flows into the capacitors 102 through the diode elements of the AC/DC converters 101, and the capacitors charge up and their voltage increases. Yet another predetermined time (e.g. 1 sec) after the closures of the second breaker switches of Cars 7 and 8, the AC/DC converters 101 of Cars 7 and 8 start their switching operations with the phase shifts in their PWM pulse signals (t5).

Finally, another predetermined time (e.g. 2 sec) after the first breaker switch 6 of Car 9 is closed, the first breaker switch 6 mounted in Car 4 is closed (t5). This causes an inrush current flow into its transformer 2, and a corresponding noise current is created. A predetermined time (e.g. 1 sec) after the closure of the first breaker switch, the second breaker switch 7 in Car 5 is closed (t6). When the second breaker switch of Car 5 is closed, DC current flows into the capacitor 102 of its CNV unit through the diode elements of the AC/DC converter 101, and the capacitor charges up and its voltage increases. Yet another predetermined time (e.g. 1 sec) after the closures of the second breaker switches of Car 5, the AC/DC converter 101 of Car 5 start its switching operation with the phase shift in its PWM pulse signal (t7).

With the second starting sequence, the transformers 2 can be connected to the AC power source at different times with predetermined time intervals therebetween. Hence, it is possible to reduce the amount of overlap of the noise currents created by their respective inrush currents. In this way the peak level of the combined noise currents can be reduced. However, the timings of the start-ups of the AC/DC converters 101 vary between the converters (t3, t5, t7). Hence, the phase difference harmonic noise reduction does not work well during the period from t2 to t7 when only some of the AC/DC converters 101 are operating. In particular, when only the AC/DC converters 101 of Cars 2 and 3 are operating, the second order harmonic noise is greatly increased.

Accordingly, Figure 8 shows an example third starting sequence for the transformers 2 and the CNV units 1 of the system of Figure 1. This sequence can avoid some of the worst effects of the superposition of the noise currents created by the inrush currents of the transformers 2, and also can reduce second order harmonic noise from the CNV units 1. First, one of the pantographs 3 mounted on Cars 1 and 9 is deployed and made ready to collect electrical power from the overhead wire (stand-by condition). After confirmation is received that the pantograph is in stand-by condition, its third breaker switch 5 is closed (t0). A predetermined time (e.g. 1 sec) after the closure of the third breaker switch, the first breaker switch 6 mounted in Car 1 is closed (t1). This causes an inrush current flow into its transformer 2, and a corresponding noise current is created. Another predetermined time (e.g. 1 sec) after the closure of the first breaker switch, the second breaker switches 7 in Cars 2 and 3 for the respective CNV units 1 of those cars are closed (t2). When the second breaker switches of Cars 2 and 3 are closed, DC current flows into the capacitors 102 of their CNV units through the diode elements of the AC/DC converters 101, and the capacitors charge up and their voltage increases. However, even though the capacitors are ready, the start of switching operations of the AC/DC converters 101 of Cars 2 and 3 is delayed.

Another predetermined time (e.g. 2 sec) after the first breaker switch 6 of Car 1 is closed, the first breaker switch 6 mounted in Car 9 is closed (t3). This causes an inrush current flow into its transformer 2, and a corresponding noise current is created. A predetermined time (e.g. 1 sec) after the closure of the first breaker switch, the second breaker switches 7 in Cars 7 and 8 for the respective CNV units 1 of those cars are closed (t4). When the second breaker switches of Cars 7 and 8 are closed, DC current flows into the capacitors 102 through the diode elements of the AC/DC converters 101, and the capacitors charge up and their voltage increases. However, similarly to Cars 2 and 3, the start of switching operations of the AC/DC converters 101 of Cars 7 and 8 is delayed.

Yet another predetermined time (e.g. 2 sec) after the first breaker switch 6 of Car 9 is closed, the first breaker switch 6 mounted in Car 4 is closed (t5). This causes an inrush current flow into its transformer 2, and a corresponding noise current is created. A predetermined time (e.g. 1 sec) after the closure of the first breaker switch, the second breaker switch 7 in Car 5 is closed (t6). When the second breaker switch of Car 5 is closed, DC current flows into the capacitor 102 of its CNV unit through the diode elements of the AC/DC converter 101, and the capacitor charges up and its voltage increases.

From t0 to t6, all of the transformers 2 are connected with the AC power source at different times with predetermined time intervals therebetween. Hence, like the second starting sequence, it is possible with third starting sequence to reduce the amount of overlap of the noise currents created by their respective inrush currents. In this way the peak level of the combined noise currents can be reduced. In particular, as shown in Figure 9, the peak levels of both the DC and AC components of the combined noise currents created by the inrush currents can be decreased relative to the DC and AC components of the combined noise currents shown in Figure 6.

Finally, a further predetermined time (e.g. 2 sec) after t6, when all the transformers 2 are connected to the AC power source and all the capacitors 102 are well charged, the control unit commands the AC/DC converters 101 of all of Cars 2, 3, 5, 7 and 8 simultaneously to start their phase-shifted switching operations (t7). In this way it is possible to reduce second order harmonic noise from the pulse signals even when the AC/DC converters 101 are starting up. Indeed harmonic noise from other frequency bands (e.g. fourth and eighth orders) can also be reduced.

In the third starting sequence, the transformers 2 are connected to the AC power source in a sequential order with a two second time interval between closures of the first breaker switches 6. However, this is just one timing example. In general, the time interval between first breaker switch closures can be set to be longer than the time period over which the level of DC and AC noise current reduces by a suitable amount. In particular, the time interval can be such that the inrush current, and hence the noise current, provoked by the previous switch closure has peaked before the next switch closure occurs.

Figure 10 shows schematically the structure of a second traction system. The system is located in a train made up of five cars (Cars 1-5). Cars 2, 3 and 4 each have a traction converter (CNV) unit 1 and a traction motor 4 powered by the CNV unit to drive the train. Cars 1 and 9 are without CNV units and traction motors, but each have transformer equipment 2 and a pantograph 3 for collecting high voltage AC electric power from an overhead wire. Again, the high voltage sides of the transformer equipment are connected by a power line 8 which extends from Car 1 to Car 5.

Figure 11 shows schematically how the phase shifted PWM-operation of the CNV units 1 cancel out second order harmonic noise. In particular, the following phase differences, corresponding to a 60° car-to-car shift, can be set for the PWM pulse signals of the three AC/DC converters 101 of the CNV units: Car 2: 120°, Car 3: 60°, Car 4: 0°.

Figure 12 then shows a comparative example fourth starting sequence for the transformers 2 and the CNV units 1 of the system of Figure 10 as controlled by its control unit 9. With this starting up sequence, it is possible to avoid the overlapping of noise current from the transformers created by their respective inrush currents. In particular, the transformers 2 are connected to the AC power source at different times (i.e. t1 and t3). On the other hand, the starting up timing (t3) of the AC/DC converter 101 mounted on Car 2 is earlier than the starting up timings (t5) of the AC/DC converters 101 mounted on Cars 3 and 4. Hence, from t3 to t5, the harmonic noise from the AC/DC converter (101) of Car 2 cannot be cancelled.

Figure 13 shows a fifth starting sequence for the transformers 2 and the CNV units 1 of the system of Figure 10. With this starting up sequence, it is possible to avoid the overlapping of noise current from the transformers 2, and to reduce harmonic noise from the CNV units 1.

First, one of the pantographs 3 mounted on Cars 1 and 5 is deployed and made ready to collect electrical power from the overhead wire (stand-by condition). After confirmation is received that the pantograph is in stand-by condition, its third breaker switch 5 is closed (t0). A predetermined time (e.g. 1 sec) after the closure of the third breaker switch, the first breaker switch 6 mounted in Car 1 is closed (t1). This causes an inrush current flow into its transformer 2, and a corresponding noise current is created. Another predetermined time (e.g. 1 sec) after the closure of the first breaker switch, the second breaker switch 7 in Car 2 for the CNV unit 1 of that car is closed (t2). When the second breaker switch of Car 2 is closed, DC current flows into the capacitor 102 of its CNV unit through the diode elements of the AC/DC converter 101, and the capacitor charges up and its voltage increases. However, even though the capacitor is ready, the start of switching operations of the AC/DC converter 101 of Car 2 is delayed.

Another predetermined time (e.g. 2 sec) after the first breaker switch 6 of Car 1 is closed, the first breaker switch 6 mounted in Car 5 is closed (t3). This causes an inrush current flow into its transformer 2, and a corresponding noise current is created. A predetermined time (e.g. 1 sec) after the closure of the first breaker switch, the second breaker switches 7 in Cars 3 and 4 for the respective CNV units 1 of those cars are closed (t4). When the second breaker switches of Cars 3 and 4 are closed, DC current flows into the capacitors 102 through the diode elements of the AC/DC converters 101, and the capacitors charge up and their voltage increases.

From t0 to t4, the transformers 2 are connected with the AC power source at different times with a predetermined time interval therebetween. Hence, it is possible with the fifth starting sequence to reduce the amount of overlap of the noise currents created by their respective inrush currents. In this way the peak level of the combined noise currents can be reduced. In particular, as shown in Figure 14, the peak levels of both the DC and AC components of the combined noise currents created by the inrush currents can be decreased relative to the DC and AC components of the combined noise currents that would occur under the fourth starting sequence.

Finally, a further predetermined time (e.g. 2 sec) after t4, when both transformers 2 are connected to the AC power source and all the capacitors 102 are well charged, the control unit commands the AC/DC converters 101 of all of Cars 2, 3 and 4 to start simultaneously their phase-shifted switching operations (t6). In this way it is possible to reduce second (and fourth and eighth) order harmonic noise from the pulse signals even when the AC/DC converters 101 are starting up.

Figure 15 shows schematically the structures of two traction systems. Each system is located in a respective train (T1 and T2) made up of five cars (Cars 1-5). The two trains are mechanically coupled to form a train set, but the each traction system is electrically independent from the other. The two traction systems are identical to each and are the same as the traction system described above in relation to Figure 10.

Figure 16 shows schematically how the phase shifted PWM-operation of the CNV units 1 cancel out second order harmonic noise. In particular, the following phase differences, corresponding to a 60° car-to-car shift, can be set for the PWM pulse signals of the three AC/DC converters 101 of the CNV units of T1: Car 2: 120°, Car 3: 60°, Car 4: 0°. Similarly, the following phase differences, corresponding to a 60° car-to-car shift, can be set for the PWM pulse signals of the three AC/DC converters 101 of the CNV units of T2: Car 2: 150°, Car 3: 90°, Car 4: 30°. The traction system of each train is thus set up to cancel out second order harmonic noise. However, as between the two trains, there is a 30° phase shift, which can further help to cancel out harmonic noise created by each train T1 and T2. In particular, a 30° phase shift between trains is preferred when the CNV units of each train have 60° car-to-car phase differences.

Figure 17 then shows a possible sixth starting sequence for the transformers 2 and the CNV units 1 of the systems of Figure 15 as controlled by their respective control units 9. With this starting up sequence, it is possible to avoid overlapping of noise current from the transformers created by their respective inrush currents. In particular, the transformers are connected to the AC power source at different times (t1, t3, t5 and t7). On the other hand, the starting up timing (t3) of the AC/DC converter 101 mounted on T1 Car 2 is earlier than the starting up timings (t5) of the AC/DC converters 101 mounted on T1 Cars 3 and 4. Similarly, the starting up timing (t7) of the AC/DC converter 101 mounted on T2 Car 2 is earlier than the starting up timings (t9) of the AC/DC converters 101 mounted on T2 Cars 3 and 4. Hence, from t3 to t5, the harmonic noise from the AC/DC converter (101) of T1 Car 2 cannot be cancelled, and from t7 to t9, the harmonic noise from the AC/DC converter (101) of T2 Car 2 cannot be cancelled.

Figure 18 shows a possible seventh starting sequence for the transformers 2 and the CNV units 1 of the systems of Figure 15. With this starting up sequence, it is possible to avoid the overlapping of noise current from the transformers 2, and to reduce harmonic noise from the CNV units 1.

First, one of the pantographs 3 mounted on T1 Cars 1 and 5 is deployed and one of the pantographs 3 mounted on T2 Cars 1 and 5 is deployed, and both are made ready to collect electrical power from the overhead wire (stand-by condition). After confirmation is received that the pantographs are in stand-by condition, their third breaker switches 5 are closed (t0).

A predetermined time (e.g. 1 sec) after the closure of the third breaker switches, the first breaker switch 6 mounted in T1 Car 1 is closed (t1). This causes an inrush current flow into its transformer 2, and a corresponding noise current is created. A predetermined time (e.g. 1 sec) after the closure of the first breaker switch, the second breaker switch 7 in T1 Car 2 for the CNV unit 1 of that car is closed (t2). When the second breaker switch of T1 Car 2 is closed, DC current flows into the capacitor 102 of its CNV unit through the diode elements of the AC/DC converter 101, and the capacitor charges up and its voltage increases. However, even though the capacitor is ready, the start of switching operations of the AC/DC converter 101 of T1 Car 2 is delayed.

Another predetermined time (e.g. 2 sec) after the first breaker switch 6 of T1 Car 1 is closed, the first breaker switch 6 mounted in T1 Car 5 is closed (t3). This causes an inrush current flow into its transformer 2, and a corresponding noise current is created. A predetermined time (e.g. 1 sec) after the closure of the first breaker switch, the second breaker switches 7 in T1 Cars 3 and 4 for the respective CNV units 1 of those cars are closed (t4). When the second breaker switches of T1 Cars 3 and 4 are closed, DC current flows into the capacitors 102 through the diode elements of the AC/DC converters 101, and the capacitors charge up and their voltage increases.

A further predetermined time (e.g. 2 sec) after t4, when both T1 transformers 2 are connected to the AC power source and all the T1 capacitors 102 are well charged, the T1 control unit 1 commands the AC/DC converters 101 of all of T1 Cars 2, 3 and 4 to start simultaneously their phase-shifted switching operations (t6). In this way it is possible to reduce second (and fourth and eighth) order harmonic noise from the pulse signals for T1 even when the AC/DC converters 101 are starting up.

Turning to T2, a predetermined time (e.g. 2 sec) after t3, the first breaker switch 6 mounted in T2 Car 1 is closed (t5). This causes an inrush current flow into its transformer 2, and a corresponding noise current is created. Another predetermined time (e.g. 1 sec) after the closure of the first breaker switch, the second breaker switch 7 in T2 Car 2 for the CNV unit 1 of that car is closed (t6). When the second breaker switch of T2 Car 2 is closed, DC current flows into the capacitor 102 of its CNV unit through the diode elements of the AC/DC converter 101, and the capacitor charges up and its voltage increases. However, even though the capacitor is ready, the start of switching operations of the AC/DC converter 101 of T2 Car 2 is delayed.

Another predetermined time (e.g. 2 sec) after the first breaker switch 6 of T2 Car 1 is closed, the first breaker switch 6 mounted in T2 Car 5 is closed (t7). This causes an inrush current flow into its transformer 2, and a corresponding noise current is created. A predetermined time (e.g. 1 sec) after the closure of the first breaker switch, the second breaker switches 7 in T2 Cars 3 and 4 for the respective CNV units 1 of those cars are closed (t8). When the second breaker switches of T2 Cars 3 and 4 are closed, DC current flows into the capacitors 102 through the diode elements of the AC/DC converters 101, and the capacitors charge up and their voltage increases.

A further predetermined time (e.g. 2 sec) after t8, when both T2 transformers 2 are connected to the AC power source and all the T2 capacitors 102 are well charged, the T2 control unit 1 commands the AC/DC converters 101 of all of T2 Cars 2, 3 and 4 to start simultaneously their phase-shifted switching operations (t6). In this way it is also possible to reduce second (and fourth and eighth) order harmonic noise from the pulse signals for T2 even when the AC/DC converters 101 are starting up.

Moreover, from t0 to t7, the T1 and T2 transformers 2 are connected with the AC power source at different times with a predetermined time interval therebetween. Hence, it is possible with the seventh starting sequence to reduce the amount of overlap of the noise currents created by their respective inrush currents. In this way the peak level of the combined noise currents can be reduced.

Another advantage of the seventh starting sequence is that it is possible to shorten the time from sequence initiation to motor output. This is because the CNV units 1 are started up train-by-train, rather than for the train set as a whole. If all the CNV units were started up at same time, the output of traction torque from the motors 4 would not commence until about t10. On the other hand, by starting up the CNV units train-by-train, it becomes possible for the motors of T1 to output traction torque from t6. Thus the timing of motor output can be brought forward by about 4 sec.

Where a train runs through a dead section which section is not electrified, accelerating the train as soon as possible after passage through the dead section is desirable in order to save energy and increase rail network capacity. A 4 sec difference in availability of traction torque can make a significant difference in such a situation.

Also where a train additionally has an engine and a generator as an energy source, the ability to change its energy source quickly from the engine and generator to the overhead wire while running is similarly desirable to save energy and increase rail network capacity.

Notwithstanding the above, it is also possible in a train set formed from two or more trains with respective traction systems to commence power conversion by the CNV units of all the systems at the same time, even if this leads to an increase in the time before availability of traction torque. This may be desirable, for example, if better harmonic noise cancellation can be achieved by performing phase difference control over all the CNV units of all the systems, rather than system-by-system.

## Claims

1. A traction system for a train, the traction system having:
plural transformers (2) for stepping down a voltage level of AC electric power provided from an overhead wire; and
plural converter units (1) for supply of electric power to motors of the train, each converter unit including an AC/DC convertor (101) for converting the stepped down AC electric power provided by one of the transformers to DC electric power and an inverter (103) for converting the DC electric power provided by the AC/DC convertor to multiphase AC electric power, wherein the AC/DC converters are configured to use pulse width modulation to convert the stepped down AC electric power on the basis of respective pulse signals which each have the same switching frequency but are phase shifted from each other to substantially cancel out second order harmonic noise from the pulse signals, **characterised by**:
plural first switches (6) which are closable to respectively connect high voltage sides of the transformers to the overhead wire, the closing of each first switch provoking an inrush current into the respective transformer;
wherein the traction system further has a controller (9) that is configured to control the timing of the closing of the first switches such that the first switches are closed in sequence with a first predetermined time interval between closures; and
wherein the controller is further configured to control the timing of the start of power conversion using pulse width modulation by each of the AC/DC converters such that the starts are simultaneous and after the first switches have closed.

2. A traction system according to claim 1 having three or more of the converter units.

3. A traction system according to claim 1 or 2 having two or more of the transformers.

4. A traction system according to any one of the previous claims, wherein the first predetermined time interval is selected such that the inrush current provoked by the closing of a previous first switch peaks before a next first switch closes.

5. A traction system according to any one of the previous claims further having:
plural second switches (7) which are closable to respectively connect the AC/DC converters to low voltage sides of the transformers;
wherein the controller is further configured to control the timing of the closing of the second switches such that each second switch closes a second predetermined time interval after the first switch which connects the high voltage sides of the respective transformer to the overhead wire has closed; and
wherein the controller is further configured to control the timing of the start of power conversion using pulse width modulation by each of the AC/DC converters such that the starts are simultaneous and after the first and the second switches have closed.

6. A traction system according to any one of the previous claims further having:
one or more pantographs (3) for obtaining the AC electric power from the overhead wire;
a power line (8) which connects the overhead wire sides of the first switches; and
one or more third switches (5) which are closable to respectively connect the one or more pantographs to the power line;
wherein the controller is further configured to control the timing of the closing of the one or more third switches such that the one or more third switches close before the start of the sequential closing of the first switches.

7. A traction system according to claim 7, wherein each converter unit further includes a smoothing capacitor (102) between the AC/DC convertor and the inverter.

8. A traction system according to claim 7 or 8, further having plural traction motors (4) driven by the multiphase AC electric power provided by the converter units.

9. A train having the traction system of any one of the previous claims.

10. A train set including first (T1) and second (T2) coupled trains, each according to claim 10, wherein the controllers of the coupled trains are further configured such that the start of the sequential closing of the first switches of the second train occurs a further predetermined time interval after the completion of the sequential closing of the first switches of the first train.

11. A train set according to claim 11, wherein the controllers of the coupled trains are further configured such that the power conversion using pulse width modulation by the AC/DC converters of the first train is started before completion of the sequential closing of the first switches of the second train.

12. A method of operating a traction system for a train, the traction system having:
plural transformers (2) for stepping down a voltage level of AC electric power provided from an overhead wire; and
plural converter units (1) for supply of electric power to motors of the train, each converter unit including an AC/DC convertor (101) for converting the stepped down AC electric power provided by one of the transformers to DC electric power and an inverter (103) for converting the DC electric power provided by the AC/DC convertor to multiphase AC electric power, wherein the AC/DC converters are configured to use pulse width modulation to convert the stepped down AC electric power on the basis of respective pulse signals which each have the same switching frequency but are phase shifted from each other to substantially cancel out second order harmonic noise from the pulse signals, **characterised in that**:
the traction system further comprises plural first switches (6) which are closable to respectively connect high voltage sides of the transformers to the overhead wire, the closing of each first switch provoking an inrush current into the respective transformer;
wherein the method includes:
controlling the timing of the closing of the first switches such that the first switches are closed in sequence with a first predetermined time interval between closures; and
controlling the timing of the start of power conversion using pulse width modulation by each of the AC/DC converters such that the starts are simultaneous and after the first switches have closed.

## Patentansprüche

1. Traktionssystem für einen Zug, wobei das Traktionssystem Folgendes umfasst:
mehrere Transformatoren (2) zum Herabtransformieren eines Spannungspegels von elektrischer WS-Leistung, die von einer Oberleitung bereitgestellt wird; und
mehrere Wandlereinheiten (1) zur Einspeisung von elektrischer Leistung für Motoren des Zugs, wobei jede Wandlereinheit einen WS/GS-Wandler (101) zum Umwandeln der herabtransformierten elektrischen WS-Leistung, die durch einen der Transformatoren bereitgestellt wird, in elektrische GS-Leistung, und einen Wechselrichter (103) zum Umwandeln der elektrischen GS-Leistung, die durch den WS/GS-Wandler bereitgestellt wird, in mehrphasige elektrische WS-Leistung umfasst, wobei die WS/GS-Wandler dazu ausgelegt sind, Pulsbreitenmodulation zu verwenden, um die herabtransformierte elektrische WS-Leistung beruhend auf entsprechenden Pulssignalen umzuwandeln, die jeweils die gleiche Schaltfrequenz aufweisen, aber voneinander phasenverschoben sind, um im Wesentlichen harmonisches Rauschen zweiter Ordnung aus den Pulssignalen zu entfernen, **dadurch gekennzeichnet, dass**:
mehrere erste Schalter (6), die schließbar sind, um jeweils Hochspannungsseiten der Transformatoren mit der Oberleitung zu verbinden, wobei das Schließen jedes ersten Schalters einen Einschaltstrom in den entsprechenden Transformator hervorruft;
wobei das Traktionssystem ferner eine Steuerung (9) aufweist, die dazu ausgelegt ist, den Zeitpunkt des Schließens der ersten Schalter zu steuern, sodass die ersten Schalter nacheinander mit einem ersten vorbestimmten Zeitabstand zwischen Schließvorgängen geschlossen werden; und
wobei die Steuerung ferner dazu ausgelegt ist, den Zeitpunkt des Beginns der Leistungswandlung unter Verwendung von Pulsbreitenmodulation durch jeden der WS/GS-Wandler zu steuern, sodass die Beginne gleichzeitig erfolgen, nachdem die ersten Schalter geschlossen wurden.

2. Traktionssystem nach Anspruch 1, das drei oder mehr Wandlereinheiten aufweist.

3. Traktionssystem nach Anspruch 1 oder 2, das zwei oder mehr Transformatoren aufweist.

4. Traktionssystem nach einem der vorangegangenen Ansprüche, wobei der erste vorbestimmte Zeitabstand so ausgewählt ist, dass der Einschaltstrom, der durch das Schließen eines vorherigen ersten Schalters hervorgerufen wird, eine Spitze erreicht, bevor ein nächster erster Schalter schließt.

5. Traktionssystem nach einem der vorangegangenen Ansprüche, ferner aufweisend:
mehrere zweite Schalter (7), die schließbar sind, um jeweils die WS/GS-Wandler mit Niedrigspannungsseiten der Transformatoren zu verbinden;
wobei die Steuerung ferner dazu ausgelegt ist, den Zeitpunkt des Schließens der zweiten Schalter so zu steuern, dass jeder zweite Schalter einen zweiten vorbestimmten Zeitabstand nach dem Schließen des ersten Schalters, der die Hochspannungsseiten des entsprechenden Transformators mit der Oberleitung verbindet, schließt; und
wobei die Steuerung ferner dazu ausgelegt ist, den Zeitpunkt des Beginns der Leistungswandlung unter Verwendung von Pulsbreitenmodulation durch jeden der WS/GS-Wandler zu steuern, sodass die Beginne gleichzeitig erfolgen und nachdem die ersten und die zweiten Schalter geschlossen wurden.

6. Traktionssystem nach einem der vorangegangenen Ansprüche, ferner aufweisend:
einen oder mehrere Stromabnehmer (3) zum Erhalten der elektrischen WS-Leistung von der Oberleitung;
eine Stromleitung (8), die die Oberleitungsseiten der ersten Schalter verbindet; und
einen oder mehrere dritte Schalter (5), die schließbar sind, um jeweils den einen oder die mehreren Stromabnehmer mit der Stromleitung zu verbinden;
wobei die Steuerung ferner dazu ausgelegt ist, den Zeitpunkt des Schließens des einen oder der mehreren dritten Schalter so zu steuern, dass der eine oder die mehreren dritten Schalter vor Beginn des aufeinanderfolgenden Schließens der ersten Schalter schließen.

7. Traktionssystem nach Anspruch 7, wobei jede Wandlereinheit ferner einen Glättungskondensator (102) zwischen dem WS/GS-Wandler und dem Wechselrichter umfasst.

8. Traktionssystem nach Anspruch 7 oder 8, ferner aufweisend mehrere Traktionsmotoren (4), die durch die mehrphasige elektrische WS-Leistung, die durch die Wandlereinheiten bereitgestellt wird, angetrieben werden.

9. Zug mit einem Traktionssystem nach einem der vorangegangenen Ansprüche.

10. Zugsatz, umfassend einen ersten (T1) und einen zweiten (T2) gekoppelten Zug, jeweils nach Anspruch 10, umfasst, wobei die Steuerungen der gekoppelten Züge ferner dazu ausgelegt sind, dass der Beginn des aufeinanderfolgenden Schließens der ersten Schalter des zweiten Zugs einen weiteren vorbestimmten Zeitabstand nach dem Abschluss des aufeinanderfolgenden Schließens der ersten Schalter des ersten Zugs erfolgt.

11. Zugsatz nach Anspruch 11, wobei die Steuerungen der gekoppelten Züge ferner dazu ausgelegt sind, dass die Leistungswandlung unter Verwendung von Pulsbreitenmodulation durch die WS/GS-Wandler des ersten Zugs vor dem Abschluss des aufeinanderfolgenden Schließens der ersten Schalter des zweiten Zugs erfolgt

12. Verfahren zum Betreiben eines Traktionssystems für einen Zug, wobei das Traktionssystem Folgendes aufweist:
mehrere Transformatoren (2) zum Herabtransformieren eines Spannungspegels von elektrischer WS-Leistung, die von einer Oberleitung bereitgestellt wird; und
mehrere Wandlereinheiten (1) zur Einspeisung von elektrischer Leistung für Motoren des Zugs, wobei jede Wandlereinheit einen WS/GS-Wandler (101) zum Umwandeln der herabtransformierten elektrischen WS-Leistung, die durch einen der Transformatoren bereitgestellt wird, in elektrische GS-Leistung, und einen Wechselrichter (103) zum Umwandeln der elektrischen GS-Leistung, die durch den WS/GS-Wandler bereitgestellt wird, in mehrphasige elektrische WS-Leistung umfasst, wobei die WS/GS-Wandler dazu ausgelegt sind, Pulsbreitenmodulation zu verwenden, um die herabtransformierte elektrische WS-Leistung beruhend auf entsprechenden Pulssignalen umzuwandeln, die jeweils die gleiche Schaltfrequenz aufweisen, aber voneinander phasenverschoben sind, um im Wesentlichen harmonisches Rauschen zweiter Ordnung aus den Pulssignalen zu entfernen, **dadurch gekennzeichnet, dass**:
das Traktionssystem ferner mehrere erste Schalter (6) umfasst, die schließbar sind, um jeweils Hochspannungsseiten der Transformatoren mit der Oberleitung zu verbinden, wobei das Schließen jedes ersten Schalters einen Einschaltstrom in den entsprechenden Transformator hervorruft;
wobei das Verfahren Folgendes umfasst:
Steuern des Zeitpunkts des Schließens der ersten Schalter, sodass die ersten Schalter nacheinander mit einem ersten vorbestimmten Zeitabstand zwischen Schließvorgängen geschlossen werden; und
Steuern des Zeitpunkts des Beginns der Leistungswandlung unter Verwendung von Pulsbreitenmodulation durch jeden der WS/GS-Wandler, sodass die Beginne gleichzeitig erfolgen, nachdem die ersten Schalter geschlossen wurden.

## Revendications

1. Système de traction pour un train, le système de traction présentant :
plusieurs transformateurs (2) pour abaisser un niveau de tension de puissance électrique CA fournie à partir d'un fil aérien ; et
plusieurs unités de conversion (1) pour fournir de la puissance électrique aux moteurs du train, chaque unité de conversion comprenant un convertisseur CA/CC (101) pour convertir la puissance électrique CA abaissée fournie par un certain des transformateurs en puissance électrique CC et un onduleur (103) pour convertir la puissance électrique CC fournie par le convertisseur CA/CC en puissance électrique CA polyphasée, dans lequel les convertisseurs CA/CC sont configurés pour utiliser une modulation de largeur d'impulsion pour convertir la puissance électrique CA abaissée sur la base de signaux d'impulsion respectifs qui présentent chacun la même fréquence de commutation mais sont déphasés les uns par rapport aux autres pour annuler sensiblement un bruit harmonique de second ordre des signaux d'impulsion, **caractérisé par** :
plusieurs premiers commutateurs (6) qui peuvent être fermés pour connecter respectivement les côtés haute tension des transformateurs au fil aérien, la fermeture de chaque premier commutateur provoquant un courant d'appel dans le transformateur respectif ;
dans lequel le système de traction présente en outre un dispositif de commande (9) qui est configuré pour commander la synchronisation de la fermeture des premiers commutateurs de telle sorte que les premiers commutateurs soient fermés en séquence avec un premier intervalle de temps prédéterminé entre les fermetures ; et
dans lequel le dispositif de commande est en outre configuré pour commander la synchronisation du démarrage de la conversion de puissance en utilisant une modulation de largeur d'impulsion par chacun des convertisseurs CA/CC de sorte que les démarrages soient simultanés et après que les premiers commutateurs aient été fermés.

2. Système de traction selon la revendication 1, comportant trois des unités de conversion ou plus.

3. Système de traction selon la revendication 1 ou 2, comportant deux des transformateurs ou plus.

4. Système de traction selon l'une quelconque des revendications précédentes, dans lequel le premier intervalle de temps prédéterminé est sélectionné de telle sorte que le courant d'appel provoqué par la fermeture d'un premier commutateur précédent atteint des pics avant la fermeture d'un premier commutateur suivant.

5. Système de traction selon l'une quelconque des revendications précédentes, présentant en outre :
plusieurs deuxièmes commutateurs (7) qui peuvent être fermés pour connecter respectivement les convertisseurs CA/CC aux côtés basse tension des transformateurs ;
dans lequel le dispositif de commande est en outre configuré pour commander la synchronisation de la fermeture des deuxièmes commutateurs de sorte que chaque deuxième commutateur se ferme un second intervalle de temps prédéterminé après la fermeture du premier commutateur qui connecte les côtés haute tension du transformateur respectif au fil aérien ; et
dans lequel le dispositif de commande est en outre configuré pour commander la synchronisation du démarrage de la conversion de puissance en utilisant une modulation de largeur d'impulsion par chacun des convertisseurs CA/CC de sorte que les démarrages soient simultanés et après que les premiers et deuxièmes commutateurs aient été fermés.

6. Système de traction selon l'une quelconque des revendications précédentes, présentant en outre :
un ou plusieurs pantographes (3) pour obtenir la puissance électrique CA à partir du fil aérien ;
une ligne électrique (8) qui connecte les côtés de fil aérien des premiers commutateurs ; et
un ou plusieurs troisièmes commutateurs (5) qui peuvent être fermés pour connecter respectivement les un ou plusieurs pantographes à la ligne électrique ;
dans lequel le dispositif de commande est en outre configuré pour commander la synchronisation de la fermeture des un ou plusieurs troisièmes commutateurs de sorte que les un ou plusieurs troisièmes commutateurs se ferment avant le démarrage de la fermeture séquentielle des premiers commutateurs.

7. Système de traction selon la revendication 7, dans lequel chaque unité de conversion comprend en outre un condensateur de lissage (102) entre le convertisseur CA/CC et l'onduleur.

8. Système de traction selon la revendication 7 ou 8, comportant en outre plusieurs moteurs de traction (4) entraînés par la puissance électrique CA polyphasée fournie par les unités de conversion.

9. Train présentant le système de traction selon l'une quelconque des revendications précédentes.

10. Ensemble de trains comprenant des premier (T1) et second (T2) trains couplés, chacun selon la revendication 10, dans lequel les dispositifs de commande des trains couplés sont en outre configurés de telle sorte que le démarrage de la fermeture séquentielle des premiers commutateurs du second train se produit un intervalle de temps prédéterminé supplémentaire après l'achèvement de la fermeture séquentielle des premiers commutateurs du premier train.

11. Ensemble de trains selon la revendication 11, dans lequel les dispositifs de commande des trains couplés sont en outre configurés de telle sorte que la conversion de puissance utilisant une modulation de largeur d'impulsion par les convertisseurs CA/CC du premier train est démarrée avant l'achèvement de la fermeture séquentielle des premiers commutateurs du second train.

12. Procédé de fonctionnement d'un système de traction pour un train, le système de traction présentant :
plusieurs transformateurs (2) pour abaisser un niveau de tension de puissance électrique CA fournie à partir d'un fil aérien ; et
plusieurs unités de conversion (1) pour fournir de la puissance électrique aux moteurs du train, chaque unité de conversion comprenant un convertisseur CA/CC (101) pour convertir la puissance électrique CA abaissée fournie par un certain des transformateurs en puissance électrique CC et un onduleur (103) pour convertir la puissance électrique CC fournie par le convertisseur CA/CC en puissance électrique CA polyphasée, dans lequel les convertisseurs CA/CC sont configurés pour utiliser une modulation de largeur d'impulsion pour convertir la puissance électrique CA abaissée sur la base de signaux d'impulsion respectifs qui présentent chacun la même fréquence de commutation mais sont déphasés les uns par rapport aux autres pour annuler sensiblement un bruit harmonique de second ordre des signaux d'impulsion, **caractérisé en ce que** :
le système de traction comporte en outre plusieurs premiers commutateurs (6) qui peuvent être fermés pour connecter respectivement les côtés haute tension des transformateurs au fil aérien, la fermeture de chaque premier commutateur provoquant un courant d'appel dans le transformateur respectif ;
dans lequel le procédé inclut les étapes consistant à :
commander la synchronisation de la fermeture des premiers commutateurs de telle sorte que les premiers commutateurs soient fermés en séquence avec un premier intervalle de temps prédéterminé entre les fermetures ; et
commander la synchronisation du démarrage de la conversion de puissance en utilisant une modulation de largeur d'impulsion par chacun des convertisseurs CA/CC de sorte que les démarrages soient simultanés et après que les premiers commutateurs aient été fermés.
